# EUROPEAN PATENT APPLICATION

(11) **EP 1 830 354 A1**
(43) Date of publication of application: **05.09.2007**
(21) Application number: 06004348.6
(22) Date of filing: 03.03.2006
(51) Int. Cl.: G11B 7/09

(54) **Pickup for accessing storage media**

(71) Applicant: DEUTSCHE THOMSON-BRANDT GMBH, 78048 Villingen-Schwenningen (DE)
(72) Inventor: Dupper, Rolf, 78050 Villingen-Schwenningen (DE); Bammert, Michael, 78739 Hardt (DE); Suzuki, Tsuneo, 78087 Mönchweiler (DE)
(74) Representative: Thies, Stephan

(57) **Abstract**

In a pickup for accessing moving storage media comprising a carrier (102), an actuator (103), and suspension wires (104-107, 201, 301, 302, 401, 402, 501, 502, 601, 602, 701, 702, 801-805, 901-905) connecting the actuator (103) to the carrier (102), for improving mechanical chracteristics of the suspension wires, one or more of the wire's properties of lateral position (406), of cross-section size (604, 606), or of cross-section shape (505, 705), are varied as a function of suspension wire arc length.

## Description

The invention relates to actuators in apparatus also known as pickups for accessing moving storage media, in particular to suspension elements therein.

For accessing moving storage media, apparatus also known as pickups are used, which have a carrier and an actuator. By carrier shall be denoted the entirety of those construction elements of the pickup that are stiffly or rigidly connected to each other and relative to which the actuator moves. By actuator shall be denoted an element carrying a lens or other transducer elements and coils, and being able to perform quick incremental movements in one or more directions or degrees of freedom relative to the moving storage medium. Accessing encompasses reading access for reading informations from the storage medium, or writing access for writing or recording informations into the storage medium, or combinations of reading and writing access.

It is known in some types of pickup to connect the actuator to the carrier by means of suspension wires. The carrier being an ensemble of rigidly connected elements does not preclude that typically the pickup as a whole, including carrier, suspension wires and actuator, is movable and is being moved in a direction orthogonal to information tracks on the storage medium, so that all storage locations on the medium can be accessed. The suspension wires constitute a connection between the actuator and the carrier which typically is at the same time mechanically elastic and electrically conductive.

A mechanically elastic connection enables the actuator to move in specific, intended directions or ways, in the form of limited deviations of its position or orientation relative to a neutral position. In many designs the actuator experiences or is exposed to a resetting force directed towards the neutral position. In other directions or degrees of freedom the actuator typically is guided or held rather stiffly or firmly.

An electrically conductive connection between the actuator and the carrier serves to carry currents for activating the actuator from a driving circuit or power amplifier stage or current source situated on the carrier to coils situated on the actuator.

In a known actuator design like in EP 1271493 A, suspension wires are arranged all in parallel, being connected to the left and right ends of a coil carrying actuator body. In cases when the actuator comprises several coils, several current conducting wire connections are needed between the carrier and the actuator. Of these, in a typical parallelogram suspension design, only 4 wires are needed for mechanical stability, any additional wires beyond 4 may actually deteriorate the mechanical properties of the actuator. Most prominently, every wire contributes to the overall resetting force or resilient force of the actuator, and minimizing the resetting force of the assembly, which is equivalent to minimizing its spring constant, contributes to maximizing sensitivity in the sense of the quotient of mechanical offset to coil current. Also, each of the wires contributes to or influences the mechanical resonances of the system, most importantly the lowest resonance frequency sometimes called eigen frequency.

A straightforward approach for minimizing the spring constant is to continuously reduce the wire diameter. However, there are limits to the feasability of this approach, mainly dictated by the necessity to handle the suspension wires during manufacturing, such as assembly and soldering. Reducing the spring constant by choosing different wire material is limited by the necessity to have a low electric resistance and good solderability. In summary it can be seen as a first disadvantage of known pickup designs that the stiffness or rigidity of suspension wires is too big in transversal direction.

Apparatuses comprising pickups as described are exposed to mechanical shock. This is deliberately being done as a part of quality testing, and it may occasionally happen during apparatus lifetime, even during operation. In quality testing, a sample pickup with or without surrounding other components will for example be dropped or made to fall under controlled and well-defined circumstances. It is then-checked as part of the quality assurance that the pickup remains functional after certain ones of these mechanical shock scenarios. In the deliberate mechanical shocks also known as drop tests, typical irreversible damages occur on suspension wires of known design, namely one or more of the suspension wires may be kinked or buckled. This may happen if the mechanical impact was directed along the wire, i.e. longitudinal, or it may occur because of an evading movement of a wire in cases of too strong deflection transversal to the wire direction. Some of the suspension wires being kinked will typically cause the actuator body, and hence also the lens or transducer element it carries, to have a modified neutral position which is offset and/or rotated against the original position as set or aligned during assembly. It is immediately obvious that optical performance and signal quality will likely deteriorate under such conditions, even if the actuator happens still to be able to be driven and move in all intended degrees of freedom. In summary it can be seen as a second disadvantage of known pickup designs that the stiffness or rigidity of suspension wires is too big in longitudinal direction.

It can be seen as a disadvantage of known pickup designs that the stiffness or rigidity of suspension wires is undesiredly big. This may concern stiffness in longitudinal or in transversal direction. The invention aims at improving this.

A pickup for accessing moving storage media, according to the invention, comprises a carrier, an actuator, and suspension wires connecting the actuator to the carrier. Each of the suspension wires has a first connection or connection location or connection point, where it is connected with the carrier, and has a second connection or connection location or point, where it is connected with the actuator. Specifically, for at least one of the suspension wires, at least one of its properties of its lateral position normal to a straight line linking the first connection and the second connection, its cross-section size, and its cross-section shape, varies as a function of an arc length of the suspension wire. An advantage of this is that varying the cross-section related properties enables to reduce the spring constant against lateral bend, and varying the lateral position of the suspension wire enables to reduce the longitudinal stiffness or rigidity.

Advantageously, in a pickup according to the invention, the variation of the suspension wire property is within upper and lower bounds, such that the difference of the varying property at a specific value of the arc length relative to an average of the varying property over the entire arc length is within the upper and the lower bound. This has an advantage that accordingly shaped suspension wires, despite the variation of some of their properties, stay within a substantially cylindrical volume or hull, so that the overall construction volume of the pickup is not unnecessarily enlarged.

In a first variant of a pickup according to the invention, it is the property of lateral position of the suspension wire or wires that is being varied, and the variation consists in the lateral position of the suspension wire following a zigzag path or a spiral path in at least a part of the arc length. An advantage of this is that the longitudinal stiffness or rigidity of the suspension wire is reduced, and by careful design of the varied part of the overall arc length of the suspension wire and a non-varied remaining part of the suspension wire, the lessening or reduction of stiffness can be designed to what is individually desirable in a specific pickup.

In a second variant of a pickup according to the invention, it is the property of cross-section area that is being varied, and the variation consists in the suopension wire having a beginning part which has a first cross-section area in a vicinity of the first connection, having an ending part which has the same first cross-section area in a vicinity of the second connection, and having a middle part which is arranged between the beginning part and the ending part and has a second cross-section area smaller than the first cross-section area. An advantage of this is that an accordingly designed suspension wire unifies the advantages of a bigger diameter wire being easier to handle and to solder with the advantages of a smaller diameter wire of being soft or less resilient against lateral bending stress.

In a third variant of a pickup according to the invention, it is the property of cross section shape that is being varied, and the variation consists in the suspension wire, in at least a part of its arc length, having a non-circular cross section with a maximum width in a preferred direction and a minimum width in a minor direction different from the preferred direction; and in the preferred direction of the suspension wire varying as a function of the arc length. An advantage of this is that an accordingly designed suspension wire is mechanically soft or less resilient in the minor direction, and the minor direction taking on different orientations in space makes the wire as a whole be soft in all or at least many directions. At the same time, in comparison to a hypothetical suspension wire which has the minor dimension throughout, i.e. which is circular and of a minor radius, the additional cross-section area stemming from the non-circular shape all along the arc length of the suspension wire keeps the electric resistance of the wire lower than what the hypothetical wire would have.

One kind of preferred direction variation according to the invention consists in the preferred direction substantially alternating between a first direction and a second direction different from the first direction. An advantage of this is that it can be easily manufactured by pressing flat in alternate directions successive sections of the suspension wire which can be achieved with one or two additional manufacturing steps.

Another kind of preferred direction variation according to the invention consists in the preferred direction being orthogonal to and continuously rotating around the straight line. An advantage of this is that besides allowing easy manufacturing by for example twisting a suspension wire of flat profile, it avoids any sharp transitions or discontinuities in the wire profile, which might give rise to attrition fractures.

Further advantages of the invention as well as variants thereof are given in the subsequent description of embodiments and in the Figures. The principles of the invention, despite being described in the following using example apparatus for accessing optical disk storage of a reflective type, can as well be used on optical storage of transmissive type, or on magnetical storage, or actually, on any access of moving storage, where a transducer has to be quickly servo controlled to follow an information track situated on a surface of a storage medium.

In the Figures,
- Fig. 1: shows a first pickup according to the invention;
- Fig. 2: shows actuator and suspension wires of the pickup of Fig. 1;
- Fig. 3: shows actuator and suspension wires of a second pickup according to the invention;
- Fig. 4: shows actuator and suspension wires of a third pickup according to the invention;
- Fig. 5: shows actuator and suspension wires of a fourth pickup according to the invention;
- Fig. 6: shows actuator and suspension wires of a fifth pickup according to the invention;
- Fig. 7: shows actuator and suspension wires of a sixth pickup according to the invention;
- Fig. 8: shows actuator and suspension wires of a seventh pickup according to the invention;
- Fig. 9: shows actuator and suspension wires of an eighth pickup according to the invention.

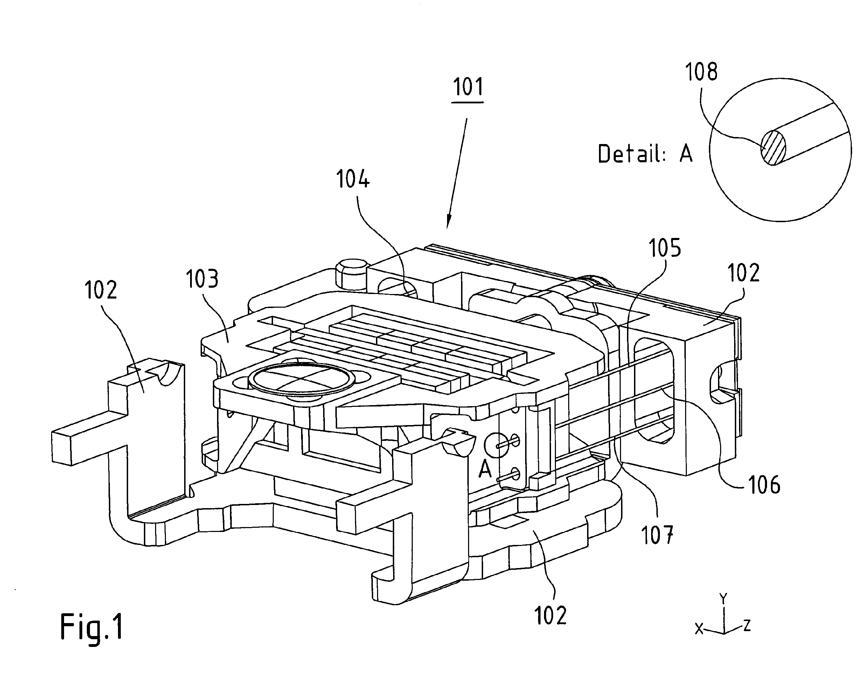

Fig. 1 shows a first pickup 101 according to the invention, having a carrier 102, an actuator 103, and suspension wires 104, 105, 106, 107 joining the carrier 102 and the actuator 103 by being connected thereto in respective first and second connection points or connections none of which is directly visible in the Figure. Two more suspension wires, namely the counterparts of suspension wires 106, 107, are arranged underneath suspension wire 104 in Y direction, but are not visible in this Figure either. In the pickup 101, suspension wires 104, 105, 106, 107 are straight and do not deviate from the straight line joining the respective connection points. Close to the connection points, the suspension wires 104, 105, 106, 107 are of circular cross-section 108 as shown in the detail A, whereas in their respective middle section, their cross-section 108 is of non-circular shape.

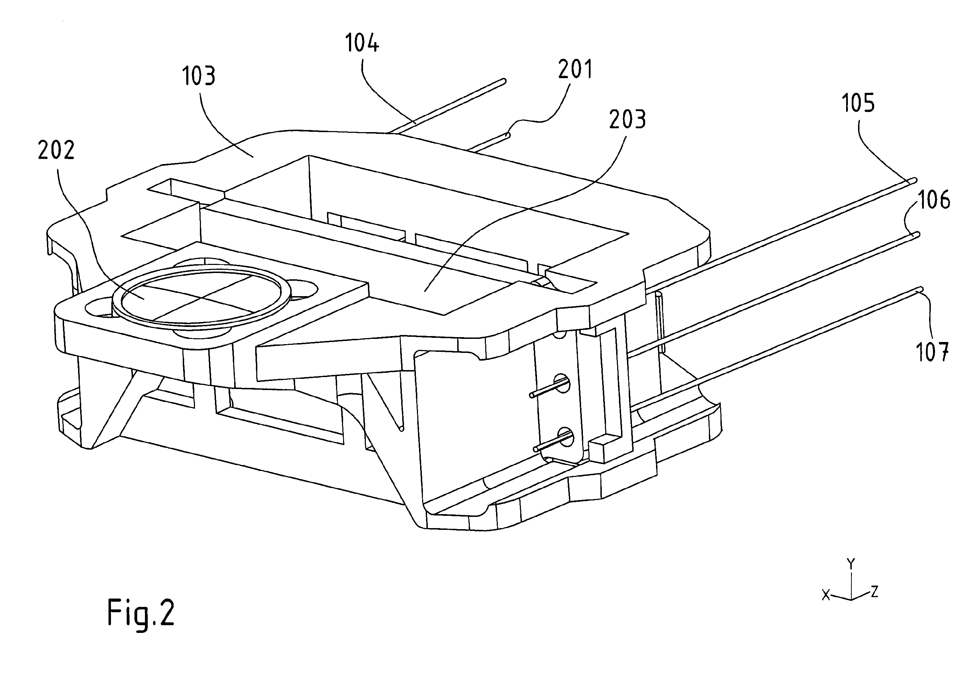

Fig. 2 shows the actuator 103 and the suspension wires 104, 201, 105, 106, 107 of the pickup 101 of Fig. 1. A sixth suspension wire is not visible in the Figure. The actuator 103 is seen carrying a lens 202 and a printed circuit board 203 which in turn carries actuator coils not shown in this Figure. Because of the orientation of the suspension wires 104, 201, 105, 106, 107 in Z direction, it is obvious that the plane of motion of the actuator is spanned by the direction of focus motion in Y direction and by the direction of tracking motion in X direction, whereas in the Z direction orthogonal to the plane of motion the actuator is stiffly or rigidly guided.

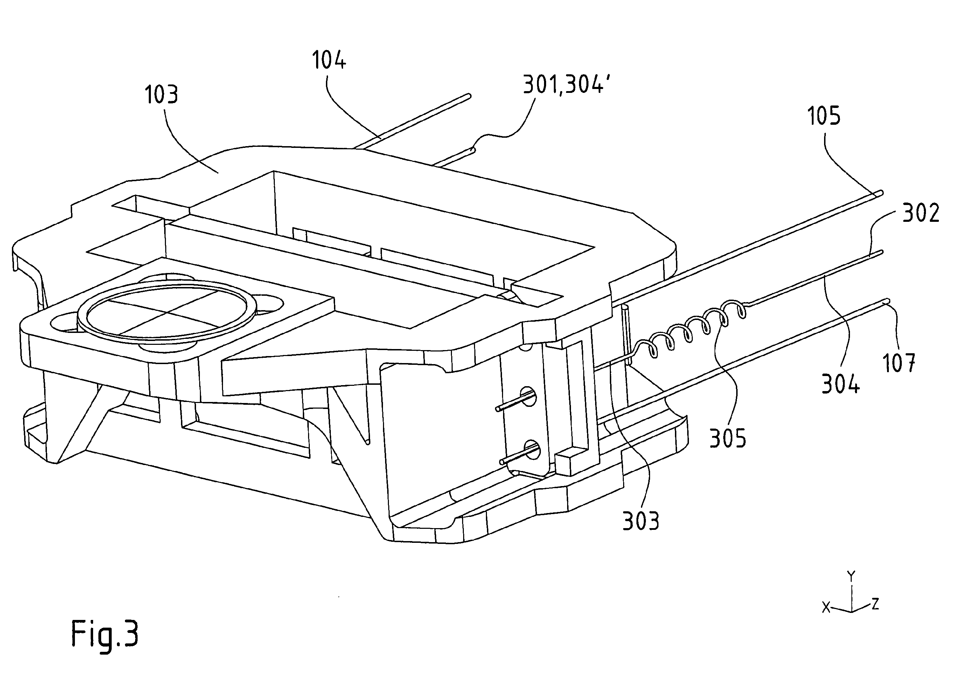

Fig. 3 shows an actuator 103 and suspension wires 104, 301, 105, 302, 107 of a second pickup according to the invention. A sixth suspension wire is not visible in the Figure. In this pickup, the middle suspension wires 301, 302 each have a beginning section 303 and an ending section 304, 304' where the suspension wire is straight, and a middle section 305 situated between the respective beginning section 303 and ending section 304, 304', where the suspension wire is laterally offset along a spiral path from the straight line joining the wire's two connection points.

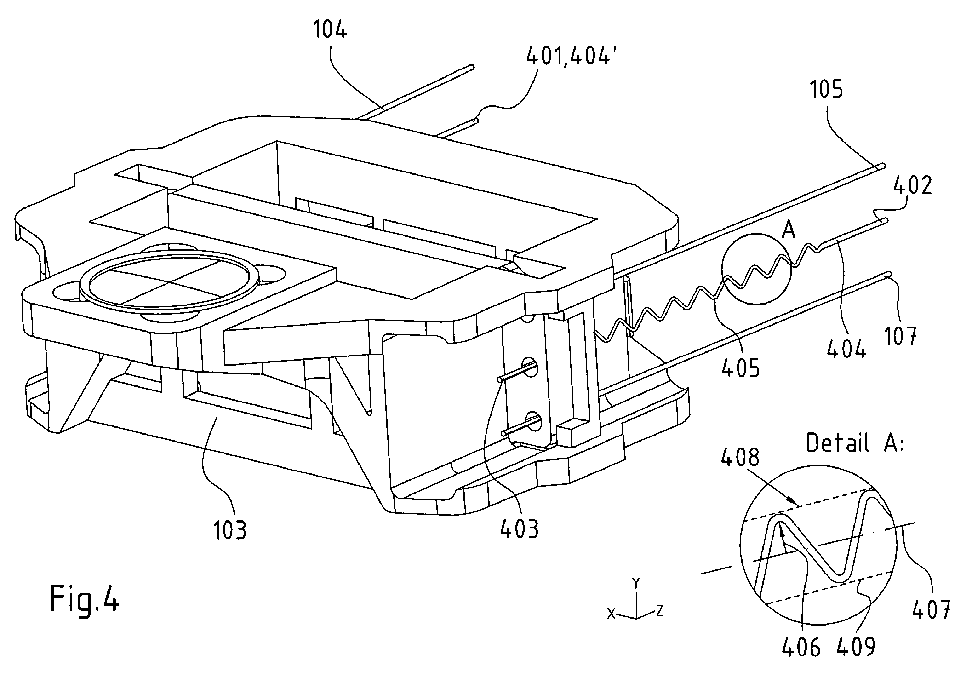

Fig. 4 shows an actuator 103 and suspension wires 104, 401, 105, 402, 107 of a third pickup according to the invention. A sixth suspension wire is not visible in the Figure. In this pickup, the middle suspension wires 401, 402 each have a beginning section 403 near the first connection point and an ending section 404, 404' near the second connection point, and in both these sections the suspension wire is straight. Between the respective beginning section 403 and ending section 404, 404', the middle suspension wires 401, 402 have a middle section 405 where the suspension wire 401, 402 is laterally offset from the straight line 407 along a vertically (Y) oriented zigzag path. In the middle section 405, the local deviation 406 of the suspension wire 401, 402 from the straight line 407 is within an interval defined by an upper bound 408 and a lower bound 409.

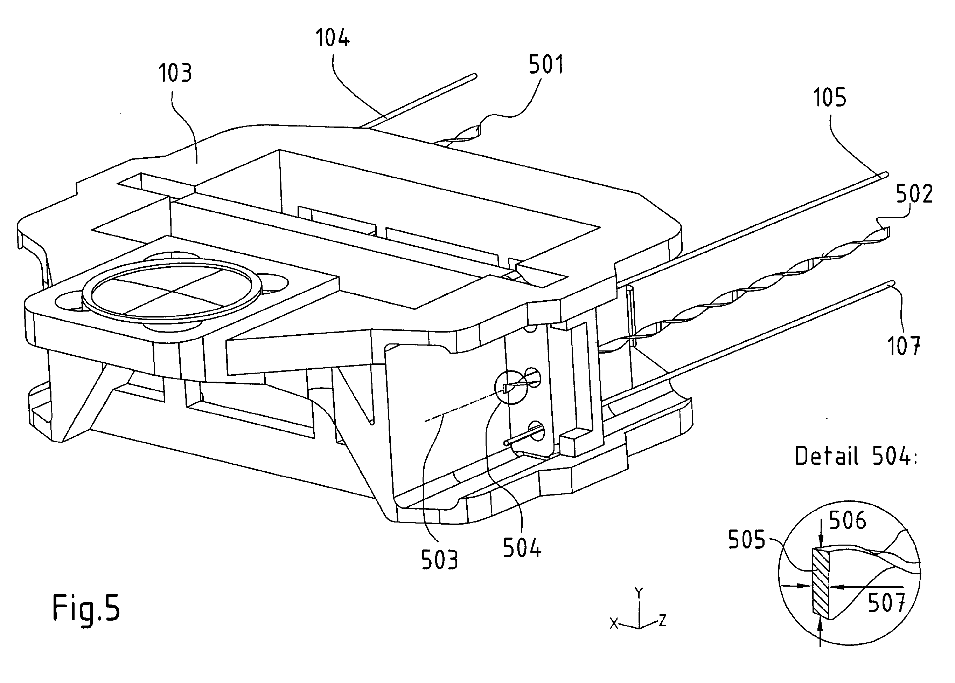

Fig. 5 shows an actuator 103 and suspension wires 104, 501, 105, 502, 107 of a fourth pickup according to the invention. A sixth suspension wire is not visible in the Figure. In this pickup, the middle suspension wires 501, 502 each have a non-circular, namely rectangular, cross section 505 as shown in Figure detail 504, with a maximum width in a preferred direction 506 and a minimum width in a minor direction 507 orthogonal to the preferred direction 506. In this pickup, the preferred direction 506 of the wire cross-section 505 or profile varies as a function of the arc length by rotating around the straight line 503, with other words the middle suspension wires 501, 502 are twisted.

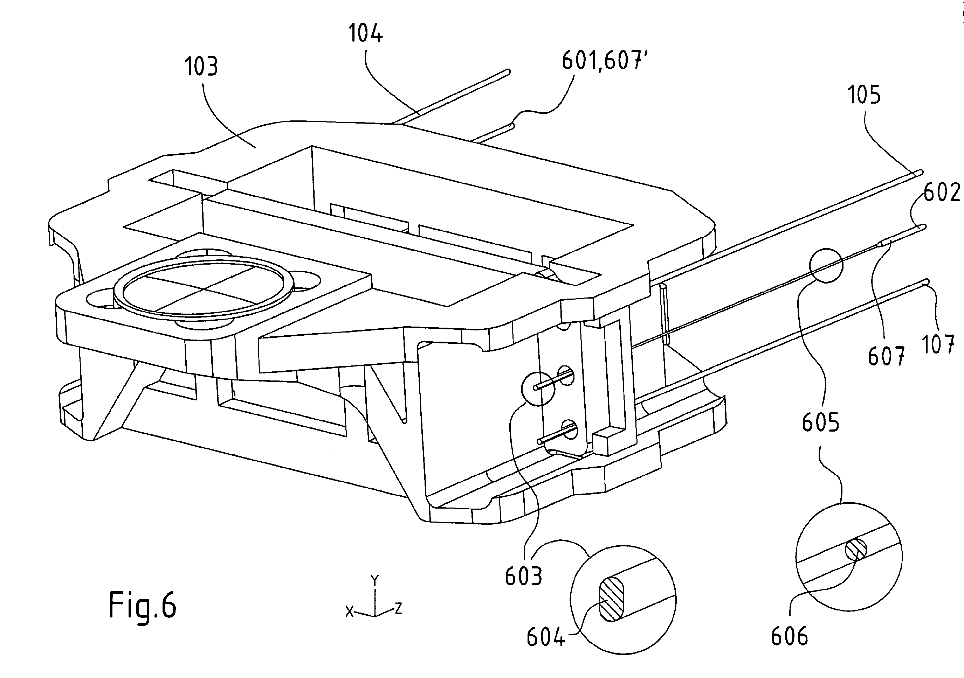

Fig. 6 shows an actuator 103 and suspension wires 104, 601, 105, 602, 107 of a fifth pickup according to the invention. A sixth suspension wire is not visible in the Figure. In this pickup, the middle suspension wires 601, 602 each have a beginning part 603 having a first cross-section area 604 in a vicinity of the first connection; they have an ending part 607, 607' having the first cross-section area 604 in a vicinity of the second connection; and they have a middle part 605 arranged between the beginning part 603 and the ending part 607, 607', which has a second cross-section area 606 smaller than the first cross-section area 604.

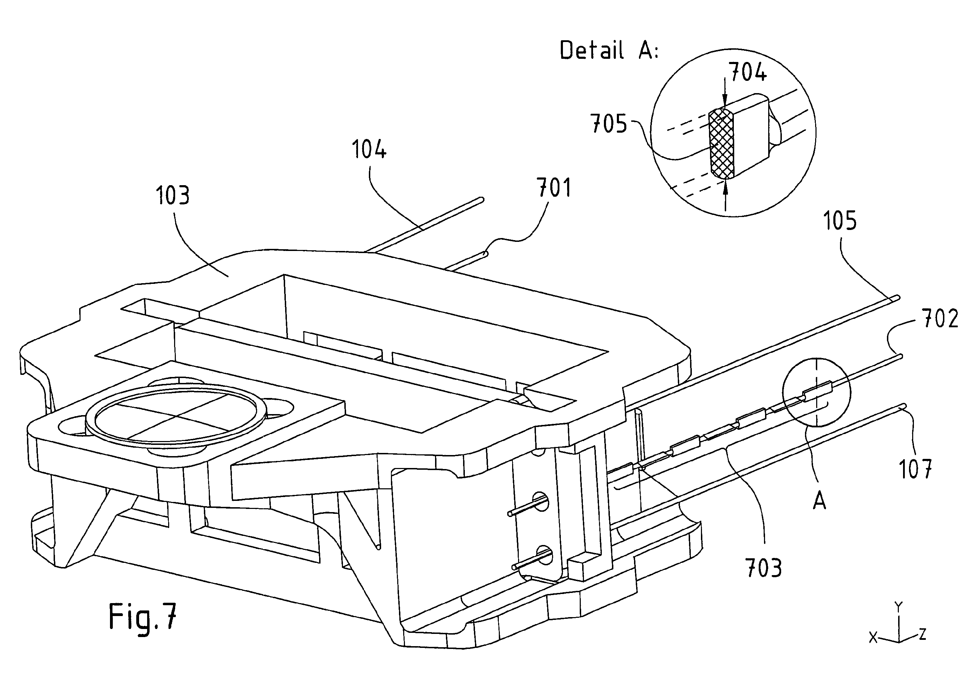

Fig. 7 shows an actuator 103 and suspension wires 104, 701, 105, 702, 107 of a sixth pickup according to the invention. A sixth suspension wire is not visible in the Figure. In this pickup, the cross-section shape 705 of the middle suspension wires 701, 702 is varied in their middle part 703 by being non-circular, namely substantially rectangular, with a maximum width in a preferred direction 704 and a minimum width orthogonal to the preferred direction 704, and where the preferred direction 704 of the suspension wire 701, 702 varies as a function of the arc length by substantially alternating between a first, vertical direction (Y) and a second, horizontal direction (X) .

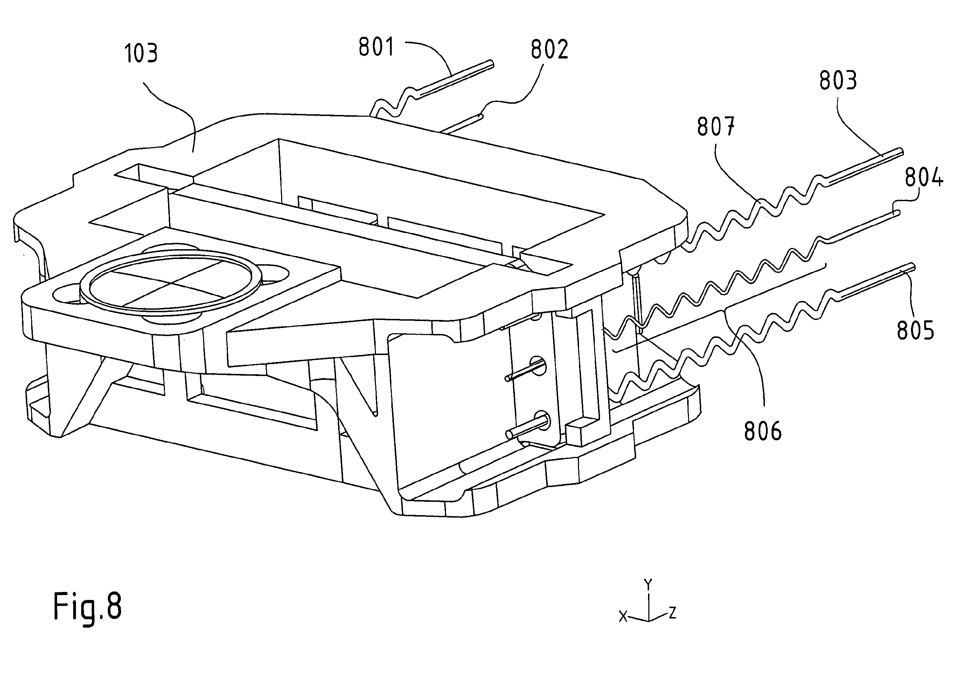

Fig. 8 shows an actuator 103 and suspension wires 801, 802, 803, 804, 805 of a seventh pickup according to the invention. A sixth suspension wire is not visible in the Figure. In this pickup, each of the suspension wires 801, 802, 603, 804, 805, in a part 806 of its arc length, is laterally offset along a vertically (Y) oriented zigzag path 807 from the straight line joining the wire's two connection points. Also, the middle suspension wires 802, 804 have a smaller cross-section than the upper/lower suspension wires 801, 803, 805. The lateral offset contributes to soften the wire stiffness in Z direction, and the smaller diameter contributes to diminish the influence of the middle suspension wires 802, 804 on the mechanical characteristics of the actuator system.

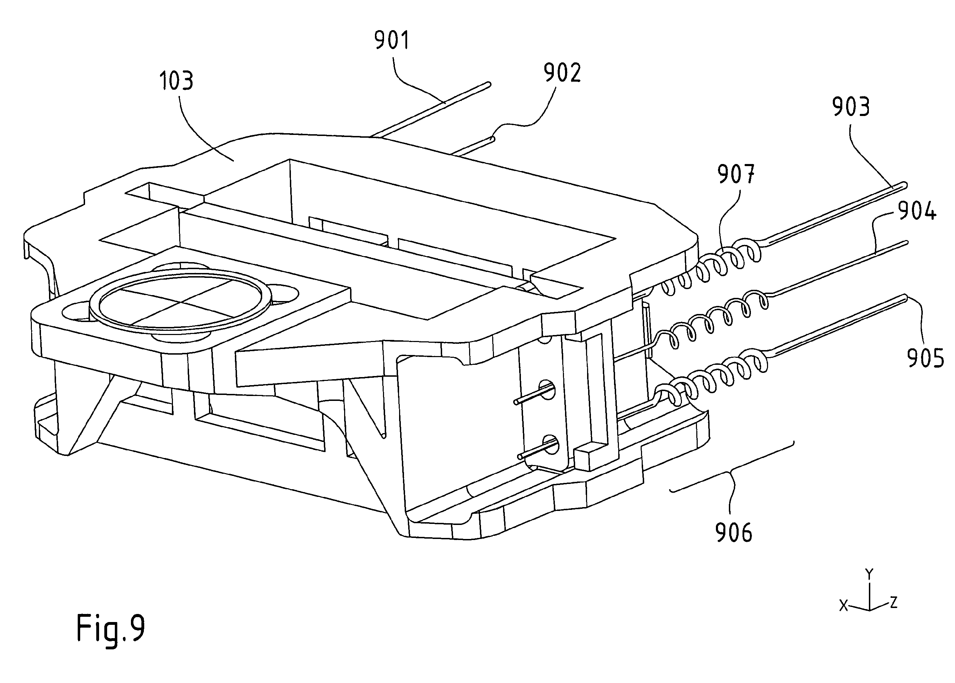

Fig. 9 shows an actuator 103 and suspension wires 901, 902, 903, 904, 905 of an eighth pickup according to the invention. A sixth suspension wire is not visible in the Figure. In this pickup, each of the suspension wires 901, 902, 903, 904, 905, in a part 906 of its arc length, is laterally offset along a spiral path 907 from the straight line joining the wire's two connection points. Also, the middle suspension wires 902, 904 have a smaller cross-section than the upper/lower suspension wires 901, 903, 905.

In the seventh and eighth pickup according to the invention, the laterally offset suspension wires 801-805, 901-905, in addition to being less stiff in the direction of the straight line which is the direction parallel to the tangent to the information track, are also more flexible in transversal direction due to the longer overall arc length of the suspension wires. If the same actuator sensitivity as in a pickup with un-offset suspension wires is aimed at, suspension wires should be chosen slightly thicker than in the non-offset case.

Advantages of the invention are, that by suitable choice of form, the influence of the middle suspension wires on the actuator are strongly reduced. Among the reduced influences are those on the mechanical resonance, on sensitivity, and on a spurious tilt which results as a byproduct of focus or tracking motion. Also, by transversally modulating the suspension wires, their stiffness in a direction parallel to the information tracks can bediminished, lessening the risk of permanent damage from instances of mechanical shock.

With other words, in a pickup for accessing moving storage media comprising a carrier 102, an actuator 103, and suspension wires 104-107, 201, 301, 302, 401, 402, 501, 502, 601, 602, 701, 702, 801-805, 901-905 connecting the actuator 103 to the carrier 102, for improving mechanical chracteristics of the suspension wires, one or more of the wire's properties of lateral position 406, of cross-section size 604, 606, or of cross-section shape 505, 705, are varied as a function of suspension wire arc length.

## Claims

1. A pickup for accessing moving storage media, the pickup comprising a carrier (102), an actuator (103), and suspension wires (104-107, 201, 301, 302, 401, 402, 501, 502, 601, 602, 701, 702, 801-805, 901-905) connecting the actuator (103) to the carrier (102), where each suspension wire (104-107, 201, 301, 302, 401, 402, 501, 502, 601, 602, 701, 702, 801-805, 901-905) has a first connection with the carrier (102) and a second connection with the actuator (103),
**characterized in that**
for at least one of the suspension wires (104-107, 201, 301, 302, 401, 402, 501, 502, 601, 602, 701, 702, 801-805, 901-905), at least one of its properties of its lateral position (406) normal to a straight line (407, 503) linking the first connection and the second connection, its cross-section size (604, 606), and its cross-section shape (505, 705), varies as a function of an arc length of the suspension wire (104-107, 201, 301, 302, 401, 402, 501, 502, 601, 602, 701, 702, 801-805, 901-905).

2. The pickup of claim 1, where the variation is within upper and lower bounds (408, 409), such that the difference of the varying property at a specific value of the arc length, relative to an average of the varying property over the entire arc length, is within the upper and the lower bound (408, 409).

3. The pickup of claim 1 or 2, where the property of lateral position (406) is varied in such a way that the lateral position (406) of the suspension wire (301, 302, 401, 402, 801-805, 901-905) follows a zigzag path (807) or a spiral path (305, 405, 907) in at least a part (305, 405, 806, 906) of the arc length.

4. The pickup of claim 1 or 2, where the property of cross-section area (604, 606) is varied in such a way that the suspension wire (601, 602) has a beginning part (603) having a first cross-section area (604) in a vicinity of the first connection, has an ending part (607) having the first cross-section area (604) in a vicinity of the second connection, and has a middle part (605) having a second cross-section area (606) smaller than the first cross-section area (604), the middle part (605) being arranged between the beginning part (603) and the ending part (607).

5. The pickup of claim 1 or 2, where the property of cross section shape (505, 705) is varied in such a way that the suspension wire (501, 502, 701, 702), in at least a part of its arc length, has a non-circular cross section shape (505, 705) with a maximum width (506, 704) in a preferred direction (506, 704) and a minimum width (507) in a minor direction (507) different from the preferred direction (506, 704), and where the preferred direction (506, 704) of the suspension wire (501, 502, 701, 702) varies as a function of the arc length.

6. The pickup of claim 5, where the variation of the preferred direction (704) consists in the preferred direction (704) substantially alternating between a first direction (X) and a second direction (Y) different from the first direction (X).

7. The pickup of claim 5, where the variation of the preferred direction (506) consists in the preferred direction (506) being substantially orthogonal to and continuously rotating around the straight line (503).
